(19) **Europäisches Patentamt European Patent Office Office européen des brevets**

(11) **EP 4 445 393 B1**

(12) **FASCICULE DE BREVET EUROPEEN**

(45) Date de publication et mention de la délivrance du brevet:
**24.12.2025 Bulletin 2025/52**

(21) Numéro de dépôt: **22839406.0**

(22) Date de dépôt: **06.12.2022**

(51) Classification Internationale des Brevets (IPC):
**H01B 7/30** *(2006.01)*    **H02J 50/12** *(2016.01)*
**H02J 7/02** *(2016.01)*    **B60L 53/12** *(2019.01)*

(52) Classification Coopérative des Brevets (CPC):
**H02J 50/12; B60L 53/12; H01B 7/30;** H02J 7/02

(86) Numéro de dépôt international:
**PCT/FR2022/052260**

(87) Numéro de publication internationale:
**WO 2023/105158 (15.06.2023 Gazette 2023/24)**

(54) **DISPOSITIF ET UN SYSTÈME DE TRANSFERT D'ÉNERGIE ÉLECTRIQUE**

VORRICHTUNG UND SYSTEM ZUR ÜBERTRAGUNG ELEKTRISCHER ENERGIE

DEVICE AND SYSTEM FOR TRANSFERRING ELECTRICAL ENERGY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.12.2021 FR 2113072**

(43) Date de publication de la demande:
**16.10.2024 Bulletin 2024/42**

(73) Titulaires:
- **Electricité de France**
  **75008 Paris (FR)**
- **Institut Polytechnique de Grenoble**
  **38000 Grenoble (FR)**
- **Université Grenoble Alpes**
  **38400 Saint-Martin-d'Hères (FR)**
- **Centre National de la Recherche Scientifique (CNRS)**
  **75016 Paris (FR)**

(72) Inventeurs:
- **WANDEROILD, Yohan**
  **77250 Moret sur Loing (FR)**
- **LEMBEYE, Yves**
  **38450 Saint-Georges-de-Commiers (FR)**
- **SARRAZIN, Benoît**
  **38360 Sassenage (FR)**
- **LEMAITRE, Damien**
  **38000 Grenoble (FR)**

(74) Mandataire: **Regimbeau**
**20, rue de Chazelles**
**75847 Paris Cedex 17 (FR)**

(56) Documents cités:
KR-B1- 101 211 699    KR-B1- 101 211 699
US-A1- 2011 140 539    US-A1- 2018 053 582

**Description**

## DOMAINE DE L'INVENTION

La présente invention concerne un dispositif et un système de transfert d'énergie électrique. Ce dispositif et ce système trouvent avantageusement application dans la recharge des véhicules électriques.

## ETAT DE LA TECHNIQUE

Grâce aux progrès technologiques de ces dernières décennies et aux incitations du gouvernements, le véhicule électrique s'est démocratisé.

Le transfert d'énergie par induction permet une charge sans contact. Des bobinages sont utilisés pour transférer l'énergie grâce à un champs magnétique. La résistivité de ces bobinages engendre des pertes ce qui diminue le rendement de la charge.

Afin de diminuer la résistance de ces bobinages, un conducteur de type « fil de Litz » peut être utilisé pour des fréquences dépassant le kilo Hertz (kHz). Le fil de Litz a pour avantage de réduire des pertes liées à un phénomène connu appelé « effet de peau ». Le document US 20110140539A1 décrit un dispositif de transfert d'énergie comprenant un fil de Litz.

Cependant, l'utilisation d'un fil de Litz introduit l'apparition d'impédance induite. Ces impédances induites sont sources d'une distribution hétérogène du courant dans le fil de Litz, générant des pertes supplémentaires, pouvant provoquer une baisse du rendement énergétique du système de transfert sans contact et une usure prématurée du fil de Litz.

## EXPOSE DE L'INVENTION

Un but de l'invention est de limiter la dégradation du rendement énergétique ainsi qu'une usure prématurée d'un dispositif de transfert d'énergie utilisant un fil de Litz.

Il est à cet effet proposé, selon un premier aspect, un dispositif de transfert d'énergie électrique comprenant :

- un fil de Litz comprenant des conducteurs électriques toronnés ou tressés ensemble, le fil de Litz propre à former un coupleur magnétique avec un autre bobinage,

- des condensateurs respectivement agencés en série avec les conducteurs, les condensateurs étant configurés pour compenser des écarts entre les impédances respectives des conducteurs électriques.

Le dispositif selon le premier aspect peut également comprendre les caractéristiques optionnelles suivantes, prises seules ou bien prises en combinaison à chaque fois que cela est techniquement possible.

De préférence, les condensateurs ont tous la même capacité.

De préférence, la capacité vaut

$$\frac{1}{4N.\pi^2.f_r^2.L_1}$$

où :

- $N$ est le nombre de condensateurs,

- $L_1$ est une inductance de la pluralité de conducteurs,

- $f_r$ est une fréquence de résonance du fil de Litz.

De préférence, tous les condensateurs ont un point de tension commun.

De préférence, au moins un des conducteurs électriques comprend des sous-conducteurs électriques isolés entre eux et toronnés ou tressés ensemble.

De préférence, au moins un des sous-conducteurs électriques comprend des brins conducteurs isolés entre eux et toronnés ou tressés ensemble.

Il est également proposé, selon un deuxième aspect, un système de transfert d'énergie comprenant deux dispositifs de transfert d'énergie électrique selon le premier aspect, dans lequel les bobinages respectifs des deux dispositifs de transfert d'énergie électrique forment ensemble un coupleur magnétique.

Il est également proposé, selon un troisième aspect, une utilisation du dispositif de transfert d'énergie selon le premier aspect ou du système de transfert d'énergie selon le deuxième aspect pour recharger un véhicule électrique.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un système de transfert d'énergie entre un réseau électrique et un véhicule, selon un mode de réalisation.

La figure 2 est un schéma électrique du système de transfert d'énergie de la figure 1, selon un mode de réalisation.

Les figures 3a et 3b illustrent un phénomène d'induction se produisant entre deux bobinages.

La figure 4a est une vue schématique d'un coupleur magnétique selon un mode de réalisation.

La figure 4b est une vue en perspective de côté de côté d'un coupleur magnétique conforme au schéma de la figure 4a.

La figure 5 est une autre vue schématique du coupleur de la figure 4a et de flux entre des bobinages de ce coupleur.

La figure 6 est un schéma électrique simplifié représentatif d'un coupleur magnétique.

La figure 7 est un schéma électrique équivalent à celui de la figure 7.

La figure 8 comprend deux vues d'un fil de Litz, selon un mode de réalisation.

La figure 9 montre une section de conducteur électrique et un effet de peau dans ce conducteur.

La figure 10 comprend différentes vues en coupe se rapportant à un fil de Litz et à certains de ses composants, à différentes échelles.

La figure 11 est un schéma électrique équivalent à un condensateur agencé en série avec l'inductance et la résistance équivalente d'un fil de Litz.

La figure 12 est un schéma électrique équivalent d'un condensateur en série avec un fil de Litz comprenant trois conducteurs.

La figure 13a est une représentation de trois conducteurs d'un fil de Litz disposés idéalement de manière équidistante, et de leurs inductances mutuelles.

La figure 13b est une représentation de trois conducteurs d'un fil de Litz disposés de manière non équidistante, et de leurs inductances mutuelles.

La figure 14 comprend deux schémas électriques équivalents d'un condensateur en série avec un fil de Litz comprenant trois conducteurs. Le schéma de gauche présente la décomposition de l'impédance totale des conducteurs.

La figure 15a est un schéma électrique équivalent d'un condensateur en série avec un fil de Litz comprenant trois conducteurs, selon un mode de réalisation.

La figure 15b est un schéma électrique équivalent d'un condensateur en série avec un fil de Litz comprenant trois conducteurs, selon un autre mode de réalisation.

La figure 16a est un schéma électrique montrant un condensateur en série avec un fil de Litz selon un mode de réalisation.

La figure 16b est un schéma électrique montrant des condensateurs respectivement en série avec différents conducteurs d'un fil de Litz selon un mode de réalisation.

La figure 17 comprend deux courbes d'amplitude de courant dans un dispositif de transfert d'énergie classique (à gauche) et deux courbes d'amplitude de courant dans un dispositif de transfert d'énergie selon un mode de réalisation de l'invention (à droite).

La figure 18a montre des courbes d'amplitude de courant dans différents conducteurs d'un fil de Litz classique.

La figure 18b montre des courbes d'amplitude de courant dans différents conducteurs d'un fil de Litz selon un mode de réalisation de l'invention.

Sur l'ensemble des figures, les éléments similaires portent des références identiques.

## DESCRIPTION DETAILLEE DE L'INVENTION

### Système de transfert d'énergie électrique

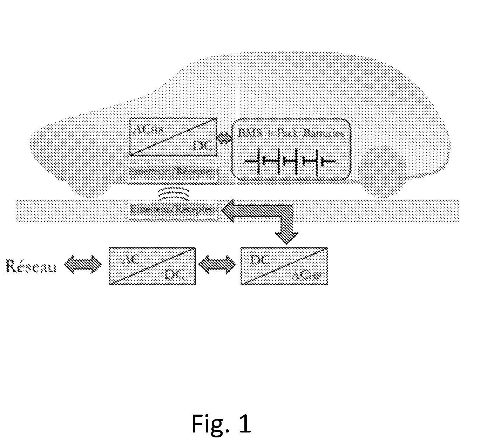

On a représenté en **figure 1** un réseau électrique, un véhicule, et un système de transfert d'énergie entre le véhicule et le réseau électrique.

Le système de transfert d'énergie peut être désigné dans la littérature comme un système de transfert « véhicule vers le réseau électrique » (« Vehicle to Grid », en anglais, abrégé en V2G) mais il est à noter que ce système autorise un transfert d'énergie bidirectionnel. Un tel système permet en effet permet de charger une batterie du véhicule électrique, mais aussi de transférer au réseau électrique de l'énergie stockée dans cette batterie. Le V2G est un mode incluant la communication en temps réel entre la batterie et le réseau. Un objectif du système est de charger la batterie du véhicule en dehors de pics de consommation du réseau, et, lorsque ces derniers arrivent, de soutenir le réseau via un transfert d'énergie depuis la batterie du véhicule.

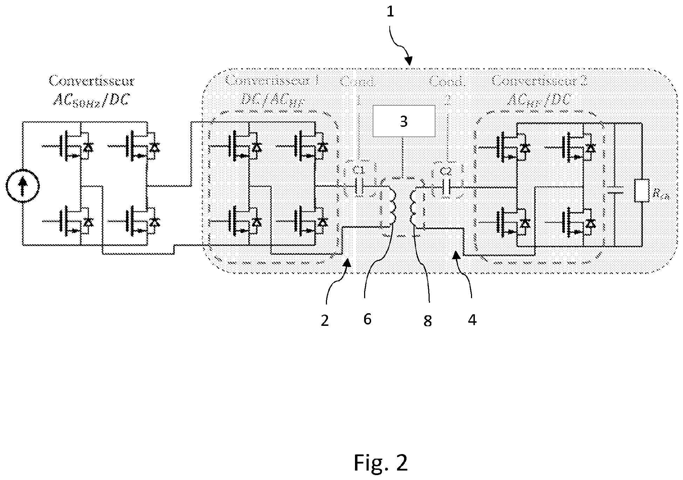

Est représenté en **figure 2** un schéma électrique du système de transfert, le système étant désigné par la référence numérique 1. Le système 1 est propre à être raccordé électriquement à un convertisseur AC/DC dit convertisseur « amont » agissant comme une interface entre le système et le réseau électrique.

Le système 1 comprend un premier dispositif 2 de transfert d'énergie, et un deuxième dispositif 4 de transfert d'énergie.

Les deux dispositifs 2 et 4 peuvent être raccordés de sorte qu'un transfert d'énergie puisse s'opérer entre eux, et être détachés. Typiquement, le deuxième dispositif 4 est incorporé dans le véhicule électrique, tandis que le premier dispositif 2 est adapté pour être couplé magnétiquement de manière temporaire au deuxième dispositif 4.

Le premier dispositif 2 comprend un convertisseur DC/AC, configuré pour convertir un courant d'entrée qui est continu en un courant alternatif. Le courant d'entrée est typiquement le courant continu en sortie du convertisseur amont.

Le premier dispositif 2 comprend par ailleurs un premier condensateur de capacité C1 ainsi qu'un bobinage primaire agencé en série avec le premier condensateur.

Le deuxième dispositif 4 comprend un bobinage secondaire. Le bobinage primaire et le bobinage secondaire peuvent être rapprochés l'un de l'autre de sorte à former un coupleur magnétique.

Le deuxième dispositif 4 comprend par ailleurs un deuxième condensateur de capacité C2 agencé en série avec la bobine secondaire.

Le deuxième dispositif 4 comprend en outre un convertisseur AC/DC, configuré pour convertir un courant alternatif en provenance du bobinage secondaire en un courant continu.

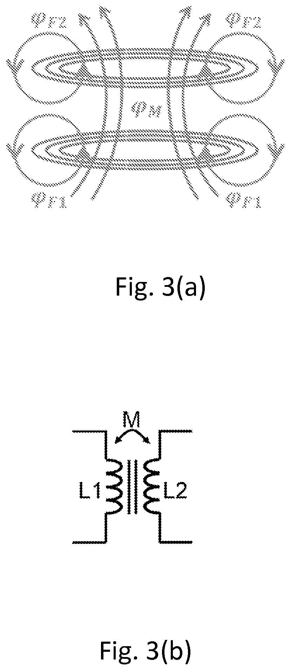

Parmi les composants apparaissant sur la figure 2, le coupleur au centre du schéma électrique est la partie permettant d'assurer un transfert d'énergie sans contact. Celui-ci repose sur le phénomène d'induction entre les bobinages primaire et secondaire, comme illustré sur la **figure 3a,** dont le schéma inductif équivalent est représenté sur la **figure 3b.** Les flux magnétiques notés $\varphi$ correspondent aux flux vus par une spire d'un bobinage, tandis que les flux notés $\phi$ sont les flux vus par les toutes les spires du bobinage considéré. Ces derniers sont définis par les équations 1 à 8 énoncés plus bas. Sur la figure 3a, $\varphi_M$ est le flux mutuel entre le bobinage primaire et le bobinage secondaire est représenté en bleu, et $\varphi_{F1}$ et $\varphi_{F2}$ sont des flux de fuite respectifs de ces bobinages.

Pour caractériser ce type de composant, le coefficient de couplage noté k permet de quantifier la qualité du transfert, en termes de flux, d'un bobinage à l'autre. Pour calculer les différents coefficients de couplage, on définit les différents flux suivants :

- $\phi_{11}$ et $\phi_{22}$ : flux d'auto-induction ou flux globaux, embrassés par les bobinages primaire et secondaire

- $\phi_{12}$ et $\phi_{21}$ : flux d'induction mutuelle

- $\phi_{F1}$, et $\phi_{F2}$ : flux de fuites primaire et secondaire

Les flux d'auto induction $\phi_{11}$ et $\phi_{22}$ sont la somme des flux mutuelle et des flux de fuite comme le décrivent les équations 1 et 2. Le flux d'auto induction $\phi_{11}$ est égal au flux d'auto induction d'une spire $\phi_{11}$ multiplié par le nombre de spires du bobinage primaire $N_1$.

$$\phi_{11} = \phi_{12} + \phi_{F1} \qquad (1)$$

$$\phi_{22} = \phi_{21} + \phi_{F2} \qquad (2)$$

L'inductance propre d'un bobinage notée L est le coefficient de proportionnalité entre le flux et le courant qui le génère. $\phi_{11}$ est ainsi égale à l'inductance propre du bobinage primaire $L_1$ multiplié par le courant primaire $I_1$. Cette relation est traduite par l'équation 3. Le même principe illustré par l'équation 4 s'applique au bobinage secondaire.

$$\phi_{11} = N_1.\varphi_{11} = L_1.I_1 \qquad (3)$$

$$\phi_{22} = N_2.\varphi_{22} = L_2.I_2 \qquad (4)$$

Le flux mutuel $\phi_{12}$ est le flux généré dans le bobinage primaire par le courant $I_1$ vu par une spire du bobinage secondaire. Le flux mutuel $\phi_{12}$ vu par l'ensemble du bobinage secondaire est ainsi proportionnel au nombre de spire $N_2$ comme décrit dans l'équation 5. On obtient réciproquement le flux mutuel émis par le bobinage secondaire et vu par le primaire, voir équation 6.

$$\phi_{12} = N_2.\varphi_{12} = M_{12}.I_1 \qquad (5)$$

$$\phi_{21} = N_1.\varphi_{21} = M_{21}.I_2 \qquad (6)$$

D'après le théorème de Stockes, en calculant la tension induite du primaire sur le secondaire et du secondaire sur le primaire, on trouve que les inductances mutuelles sont égales ($M_{12} = M_{21} = M$). L'inductance mutuelle obtenue notée M est celle considérée sur dans le schéma inductif équivalent d'un coupleur (figure 3b). Les équations 5 et 6 deviennent :

$$\phi_{12} = N_2.\varphi_{12} = M.I_1 \qquad (7)$$

$$\phi_{21} = N_1.\varphi_{21} = M.I_2 \qquad (8)$$

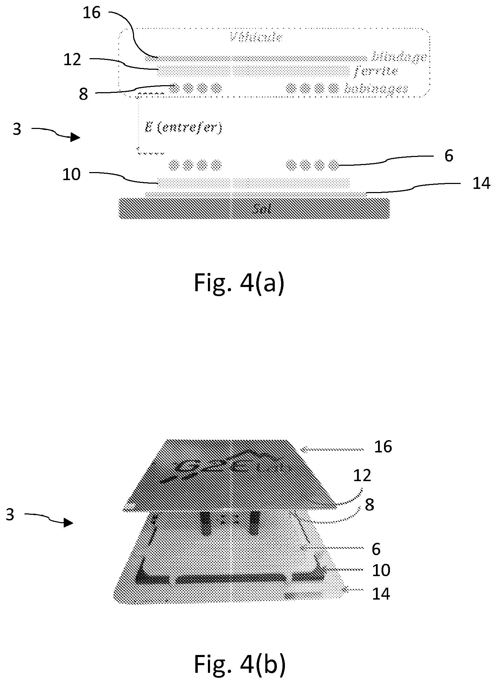

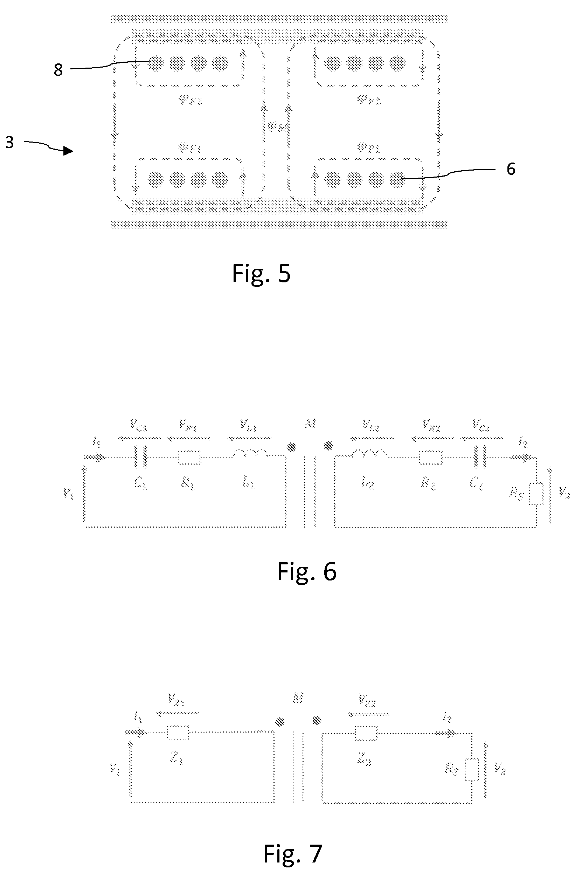

Un coupleur 3 selon un mode de réalisation est représenté sur les figures 4a et 4b. Ce coupleur comprend deux plaques en ferrite 10 et 12, entre lesquelles les bobinage primaire 6 et secondaire 8 sont agencés. La ferrite permet d'améliorer grandement le couplage k, ce qui est très avantageux, notamment pour les coupleurs à forts entrefer (par exemple pour la charge des véhicules électriques). Le coupleur 3 comprend par ailleurs deux blindages 14 et 16 remplissant une fonction de « bouclier » à des champs magnétiques environnants. Ces blindages sont par exemple formés par deux plaques en aluminium, entre lesquelles sont agencées les deux plaques en ferrites. L'entrefer de ce coupleur est par exemple de 21 centimètres. Bien entendu, les éléments 10 et 14 font partie du premier dispositif 2, tandis que les éléments 12 et 16 font partie du deuxième dispositif 4.
En reprenant la figure 4a et en y ajoutant le flux mutuel et les flux de fuite $\phi_{F1}$ et $\phi_{F2}$, la **figure 5** est obtenue. On remarque que le flux mutuel vu par chaque spire des bobinages primaire et secondaire noté $\varphi_M$ est égal à $\varphi_{12}$, égal à $\varphi_{21}$.
Le schéma électrique présenté à la **figure 6** représente le coupleur avec les condensateurs résonants ainsi que la charge Rs représentant la charge Rch ramenée côté secondaire du coupleur. Rs est égale à Rch fois une constante. Il est possible de possible de synthétiser le schéma de la figure 6 par le schéma de la figure 7 en regroupant les résistances, inductances et capacités primaire et secondaire en les impédances Z1 et Z2, données par les équations :

$$Z_1 = R_1 + j.L_1.w + \frac{1}{j.C_1.w} \qquad (9)$$

$$Z_2 = R_2 + j.L_2.w + \frac{1}{j.C_2.w} \qquad (10)$$

Dans une optique de transférer uniquement une puissance utile à la charge, soit la puissance active Ps donnée par l'équation 11 ci-dessous :

$$P_s = R_s.I_2^2 \qquad (11)$$

La présence intrinsèquement liée aux bobinages des inductances $L_1$ et $L_2$ induit cependant un transfert de puissance réactive inutile pour la charge et induisant des pertes supplémentaires. C'est pourquoi des condensateurs résonants C1 et C2 sont ajoutés en série avec les inductances, afin de d'apporter l'énergie réactive absorbées par celles-ci. L'objectif est ainsi d'avoir les réactances $X_1$ et $X_2$ nulles, celles-ci sont introduites dans les équations 12 et 13, et définies dans les équations 14 et 15.

$$Z_1 = R_1 + j.X_1 \qquad (12)$$

$$Z_2 = R_2 + j.X_2 \qquad (13)$$

Où :

$$X_1 = j.L_1.w + \frac{1}{j.C_1.w} \qquad (14)$$

$$X_2 = j.L_2.w + \frac{1}{j.C_2.w} \qquad (15)$$

La fréquence de résonance fr permet d'annuler les réactances $X_1$ et $X_2$. Connaissant les inductances $L_1$ et $L_2$, les capacités $C_1$ et $C_2$ sont calculées avec les équations 16 et 17 :

$$C_1 = \frac{1}{4.\pi^2.f_r^2.L_1} \qquad (16)$$

$$C_2 = \frac{1}{4.\pi^2.f_r^2.L_2} \qquad (17)$$

Il est classiquement employé pour constituer les bobinages des systèmes de transfert sans contact pour la charge des véhicules électriques.

**Réalisation des bobinages à partir de fils de Litz**

Le bobinage primaire 6 est formé par un fil de Litz enroulé sur lui-même. De même, le bobinage secondaire 8 est formé par un autre fil de Litz enroulé sur lui-même.

Dans ce qui suit, on détaille la structure et les propriétés d'un fil de Litz, qui peut aussi bien s'appliquer au fil de Litz primaire qu'au fil de Litz secondaire.

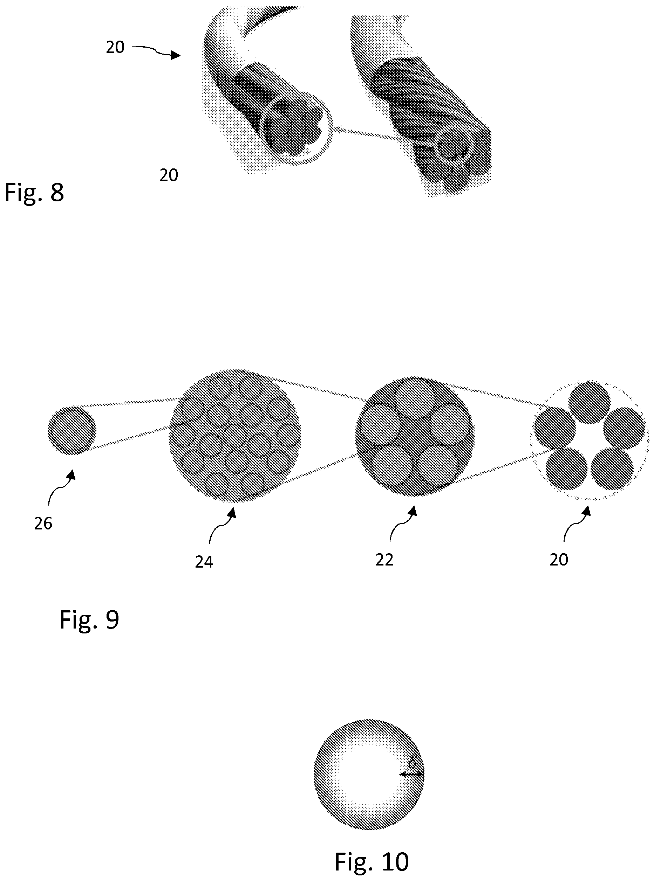

En référence aux **figures 8** et **9,** un fil de Litz 20 comprend plusieurs conducteurs électriques 22 agencés en parallèle, isolés les uns des autres mais connectés à leurs extrémités. Les conducteurs électriques 22 sont tressés ou vrillés ensembles. Les figures 8 et 9 illustrent un mode de réalisation de fil de Litz comprenant cinq conducteurs électriques vrillés ensemble.

Le fil de Litz peut également comprendre une gaine entourant l'ensemble des conducteurs électriques 20.

Chaque conducteur électrique 22 peut lui-même comprendre plusieurs sous-conducteurs 24 tressés ou vrillés entre eux. Ainsi, un conducteur électrique 22 peut être un toron formé ou une tresse formée par plusieurs sous-conducteurs 24.

A son tour, un sous-conducteur 24 peut comprendre plusieurs brins conducteurs élémentaires, les brins pouvant être tressés ou vrillés entre eux. Ainsi, un sous-conducteur peut être un sous-toron formé ou une sous-tresse formée par plusieurs brins conducteurs.

En définitive, les brins élémentaires 26 sont tressés ou vrillés en groupes de différents niveaux d'échelle afin de former le fil de Litz 20.

Dans le mode de réalisation illustré sur les figures 8 et 9, le fil de Litz 20 comprend cinq conducteurs 22 formant cinq torons, chacun comprenant 5 sous-torons 24, chacun comprenant 16 brins élémentaires (5x5x16). Ce fil de Litz est ainsi réalisé à partir de 400 brins élémentaires 26.

Le fil de Litz 20 a pour avantage réduire les pertes liées au phénomène appelé « effet de peau », à cause duquel le courant se répartit uniquement sur la périphérie du conducteur, sur une distance appelée épaisseur de peau et notée $\delta$. Cette épaisseur dépend de la fréquence du courant mais aussi le matériau du conducteur. La concentration du courant sur la périphérie réduit la section efficace de conducteur utilisée ce qui a pour effet d'augmenter la résistivité du conducteur et donc les pertes engendrées par le système. La fréquence à utiliser est contrainte par la norme, mais physiquement augmenter la fréquence permet d'utiliser des composants de plus petite taille et de transférer plus d'énergie.

La **figure 10** illustre l'effet de peau dans un conducteur de section circulaire.

En prenant l'exemple d'un courant I de 30 $A_{eff}$ dans les bobinages et un cahier des charges imposant une densité de courant J de 5 A/mm$^2$ , la section de cuivre $S_{cu}$ nécessaire est de 6 $mm^2$ :

$$S_{cu} = \frac{I}{J} = \frac{30}{5} = 6 \, mm^2 \qquad\qquad (18)$$

Or une fréquence de fonctionnement typique pour les systèmes de transfert sans contact pour véhicule électrique est celle recommandée par la norme J2954 égale à 85 kHz. L'épaisseur de peau à cette fréquence est égale à 225 $\mu$m. Dans ce cas, seule 3.2 % de la surface de cuivre du conducteur serait parcourue par le courant comme l'indique l'équation 20(20).

Pour lutter contre l'effet de peau, les brins élémentaires 26 du fil de Litz 20 sont isolés électriquement entre eux et connectés à leurs extrémités, et le diamètre de la section de chaque brin 26 est inférieure ou égale à l'épaisseur de peau.

On note $\rho$ la résistivité du cuivre, $\mu_o$ la perméabilité magnétique du vide et $\mu_r$ la perméabilité magnétique relative du cuivre, égale à 1. On a :

$$\delta_{85kHz} = \sqrt{\frac{\rho}{\pi.\mu_o.\mu_r.f}} = \sqrt{\frac{17.10^{-9}}{\pi.4.\pi.10^{-7}.1.85000}} = 225 \, \mu m \qquad (19)$$

$$100.\frac{S_{ut}}{S_{cu}} = 100.\frac{\pi.\delta_{85kHz}^{\;2}}{5.10^{-6}} = 3.2 \, \% \qquad\qquad (20)$$

En contrepartie de cet effet technique de lutte contre l'effet de peau, la mise en parallèle de plusieurs conducteurs parcourus par un courant alternatif fait apparaître des couplages magnétiques entre eux d'importances variées selon la proximité des conducteurs. Il se passe alors entres les différents torons 22, sous-torons 24 et brins 26 exactement le même phénomène qu'entre les deux bobinages du coupleur illustrés sur la figure 3. Afin de mettre en lumière les problèmes engendrés par ces mutuelles, une étude est proposée ci-dessous considérant les torons constituant le fil de Litz du bobinage primaire 6. Le même résultat est cependant obtenu en considérant les sous-torons, brins, ou même la mise en parallèle de plusieurs fils de Litz. Une étude sur le bobinage secondaire 8 fournirait exactement les mêmes conclusions.

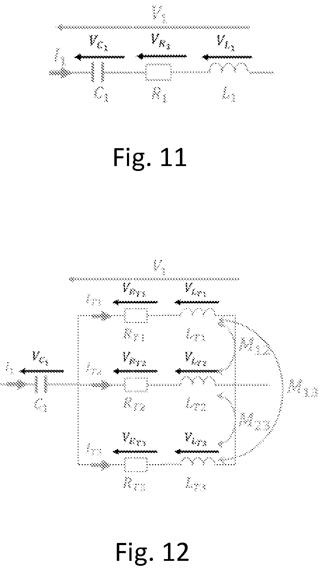

Reprenons le schéma électrique du coupleur avec les condensateurs résonants représentés en figure 6, sur lequel apparaissent la résistance $R_1$ et inductance $L_1$ du bobinage primaire, soit du fil de Litz au primaire du coupleur. Ces éléments sont en série avec le condensateur résonant primaire $C_1$ , ce qu'illustre le schéma électrique en figure 11. Il est à noter que la résistance $R_1$ et inductance $L_1$ du fil de Litz sont la résistance et l'inductance équivalentes des résistances et inductances des torons connectés électriquement en parallèle (par opposition à la connexion série). Afin de simplifier l'étude, le fil de Litz considéré est constitué de 3 torons, notés T1, T2, et T3, chacun composé d'une résistance $R_{Ti}$ et d'une inductance $L_{Ti}$, i correspondant au numéro du toron. Les résistances DC sont celles considérées ici, soit celles obtenues avec une courant continu, la considération de la résistance liée aux effets d'un courant alternatif n'apporterait pas davantage de précision ici.

Aux fins de mettre en évidence la présence d'hétérogénéité, procédons à quelques simplifications pour mieux dégager le raisonnement sous-jacent. Une approximation raisonnable est de considérer que les torons ont la même résistance notée $R_T$, car ils ont les mêmes caractéristiques géométriques. Les torons ont en effet la même longueur et la même section de cuivre.

$$R_{T1} = R_{T2} = R_{T3} = R_T \qquad (21)$$

De même, les inductances propres des torons peuvent être considérées égales du fait des mêmes caractéristiques physiques des bobines formées par chaque toron. Cela se traduisant par $L_{T1} = L_{T2} = L_{T3} = L_T$. Les torons étant couplés entre eux, il possible de reprendre le schéma inductif équivalent d'un coupleur à deux enroulements de la figure 3b et de l'appliquée à chaque couple de torons possible. Dans notre cas :

- Les torons T1 et T2 sont couplés, donnant lieu à un coefficient de couplage et une inductance mutuelle notés respectivement $k_{12}$ et $M_{12}$. Ainsi : $M_{12} = k_{12}.\sqrt{L_T.L_T} = k_{12}.L_T$ Les flux mutuels entre ces deux torons sont notés $\phi_{12}$ et $\phi_{21}$ tels que $\phi_{12} = M_{12}.I_{T1}$ et $\phi_{21} = M_{12}.I_{T2}$

- Les torons T1 et T3 sont couplés, donnant lieu à un coefficient de couplage et une inductance mutuelle notés respectivement $k_{13}$ et $M_{13}$. Ainsi : $M_{13} = k_{13}.L_T$. Les flux mutuels entre ces deux torons sont notés $\phi_{13}$ et $\phi_{31}$ tels que $\phi_{13} = M_{13}.I_{T1}$ et $\phi_{31} = M_{13}.I_{T3}$

- Les torons T2 et T3 sont couplés, donnant lieu à un coefficient de couplage et une inductance mutuelle notés respectivement $k_{23}$ et $M_{23}$. Ainsi : $M_{23} = k_{23}.L_T$. Les flux mutuels entre ces deux torons sont notés $\phi_{23}$ et $\phi_{32}$ tels que $\phi_{23} = M_{23}.I_{T2}$ et $\phi_{32} = M_{23}.I_{T3}$, sachant que $M_{12} = M_{21}$, $M_{13} = M_{31}$, et $M_{23} = M_{32}$.

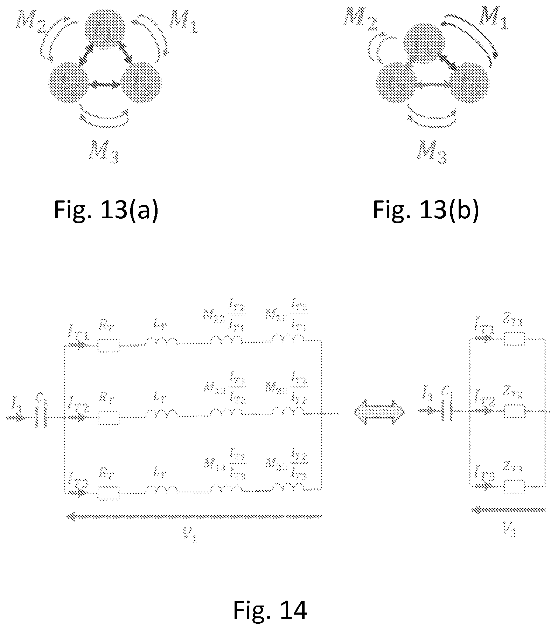

Dans le cas idéal d'une construction du fil de Litz, les trois torons considérés sont disposés exactement de la même façon les uns par rapport aux autres, comme le montre la **figure 13a**. Dans ce cas idéal, les coefficients de couplage et inductances mutuelles sont égaux : $k_{12} = k_{13} = k_{23}$ et $M_{12} = M_{13} = M_{23}$. Ce n'est cependant pas le cas dans la réalité, des distances différentes peuvent séparer les torons comme le montre la figure 13b, donnant lieu à différents coefficients de couplage et inductances mutuelles sont égaux : $k_{12} \neq k_{13} \neq k_{23}$ et $M_{12} \neq M_{13} \neq M_{23}$.

Or ces inductances mutuelles différentes vont engendrer des réactances différentes dans les torons. Prenons l'exemple des deux impédances induites sur le toron T2 par les torons T1 et T3, notées respectivement $Z_{i12}$ et $Z_{i32}$. Commençons par trouver l'expression de $Z_{i12}$ par la loi de Lenz-Faraday en convention récepteur, le flux mutuel $\phi_{12}$ émis par le courant $I_{T1}$ du toron T1 et vu par le toron T2 induit une tension $V_{12}$ dans le toron T1, dont l'expression complexe est donnée ci-dessous :

$$V_{12} = j.w.\phi_{12} = j.w.M_{12}.I_{T1} \qquad (22)$$

Où w est la pulsation, sachant que : $w = 2.\pi.f$.

L'équation 23 se comprend à la lumière de la loi de Lenz-Faraday dans le domaine temporel donnée dans l'équation 24 ci-dessous :

$$V_{12}(t) = \frac{d\phi_{12}(t)}{dt} \qquad (23)$$

Où $\phi_{12}(t) = \phi_{12}^{*}e^{jwt}$, avec $\phi_{12}^{*}$ le module de $\phi_{12}(t)$.

Or en divisant $V_{12}$ par le courant $I_{T2}$ parcourant le toron, une impédance induite notée $Z_{i12}$ apparaît, égale à :

$$Z_{i12} = j.w.M_{12}.\frac{\overline{I_{T1}}}{\overline{I_{T2}}} \tag{24}$$

En appliquant le même raisonnement, l'expression de $Z_{i32}$ est :

$$Z_{i32} = j.w.M_{23}.\frac{\overline{I_{T3}}}{\overline{I_{T2}}} \tag{25}$$

**L'impédance** totale induite sur le toron T2 par les torons T1 et T3 est notée $Z_{i2}$ et est égale à la somme de $Z_{i12}$ et $Z_{i32}$. De même, les impédances totales induites dans les torons T1 et T3 seront notées respectivement $Z_{i1}$ et $Z_{i3}$ telles que $Z_{i1} = Z_{i12} + Z_{i13}$ et $Z_{i3} = Z_{i13} + Z_{i23}$. L'impédance totale du toron T2 notée $Z_{T2}$ est ainsi égale à :

$$Z_{T2} = R_T + j.L_T.w + Z_{i12} + Z_{i32}$$

$$Z_{T2} = R_T + j.L_T.w + j.w.M_{12}.\frac{\overline{I_{T1}}}{\overline{I_{T2}}} + j.w.M_{23}.\frac{\overline{I_{T3}}}{\overline{I_{T2}}}$$

$$Z_{T2} = R_T + j.w.\left(L_T + M_{12}.\frac{\overline{I_{T1}}}{\overline{I_{T2}}} + M_{23}.\frac{\overline{I_{T3}}}{\overline{I_{T2}}}\right) \tag{26}$$

De même, les impédances totales des torons T1 et T3, notées respectivement $Z_{T1}$ et $Z_{T3}$ sont données par les équations 28 et 29 ci-dessous :

$$Z_{T1} = R_T + j.w.\left(L_T + M_{12}.\frac{\overline{I_{T2}}}{\overline{I_{T1}}} + M_{13}.\frac{\overline{I_{T3}}}{\overline{I_{T1}}}\right) \tag{27}$$

$$Z_{T3} = R_T + j.w.\left(L_T + M_{13}.\frac{\overline{I_{T1}}}{\overline{I_{T3}}} + M_{23}.\frac{\overline{I_{T2}}}{\overline{I_{T3}}}\right) \tag{28}$$

Les schémas électriques en figure 14 reprennent celui de la figure 12 en y représentant les impédances induites pour le schéma de gauche de la figure 14. Sur cette dernière, les deux schémas sont équivalents. Les torons sont connectés électriquement à leurs extrémités, ils ont donc la même tension notée $V_1$ à leurs bornes. Les courants dans les torons sont différents en raison de la loi d'Ohm, leurs impédances $Z_{T1}$, $Z_{T2}$ et $Z_{T3}$ étant différentes. Ceci est dû à la construction imparfaite du fil de Litz. L'hétérogénéité de courant résultante peut être illustrée par simulation et par expérimentation, comme on le verra plus loin.

### Condensateurs pour compenser des écarts d'impédances

Le problème d'une distribution de courant hétérogène dans plusieurs conducteurs couplés a été illustré précédemment considérant l'exemple d'un fil de Litz à 3 torons. Les différents couplages entre les torons T1, T2, et T3 induisent dans ces derniers des impédances induites $Z_{i1}$, $Z_{i2}$ et $Z_{i3}$ différentes, impliquant l'obtention d'impédances totales $Z_{T1}$, $Z_{T2}$, et $Z_{T3}$ différentes dans les torons 22. Considérant que la tension aux bornes des torons 22 est la même, les disparités de courants dans les torons seront proportionnelles aux disparités d'impédances totales en raison de la loi d'Ohm. Le raisonnement présenté ici peut être élargi à un nombre de torons 22 plus élevé ou réduit à l'échelle des chacun des brins.

Afin de réduire fortement les écarts d'impédance entre les conducteurs utilisés au sein du fil de Litz primaire, le premier dispositif 2 comprend une pluralité de condensateurs agencés respectivement en série avec les conducteurs 22 du fil de Litz primaire 20. Autrement dit, chaque conducteur 22 du fil de Litz primaire est mis en série avec un condensateur qui lui est propre.

Tous les condensateurs agencés en série avec les conducteurs 22 ont un point de tension commun.

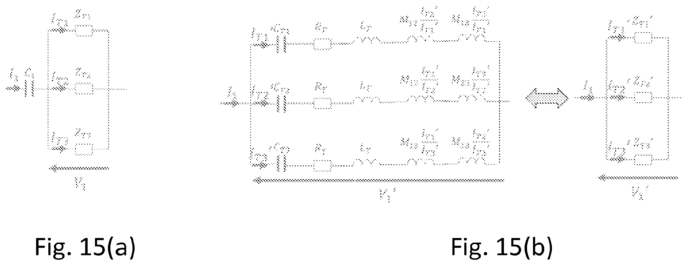

Avec l'exemple du fil de Litz à 3 torons, le schéma électrique de la solution proposée est celui de la figure 15b.

Le condensateur résonant $C_1$ sur la figure 15a est dimensionné, comme indiqué à l'équation 16(16), à la fréquence de résonance fr considérant l'inductance du fil de Litz $L_1$, soit l'inductance équivalente aux inductances des torons formés par les conducteurs 22. Dans notre exemple à trois torons, l'expression de $L_1$ est donnée par l'équation 30 ci-dessous :

$$L_1 = \frac{L_T^3 + 2.M_{12}.M_{13}.M_{23} - L_T.(M_{12}^2 - M_{13}^2 - M_{23}^2)}{4.(L_T - M_{12}).(L_T - M_{23}) - (L_T - M_{12} - M_{13} - M_{23})^2} \tag{29}$$

Les condensateurs résonants $C_{T1}$, $C_{T2}$, et $C_{T3}$ sont dimensionnés tels que :

$$C_{T1} = C_{T2} = C_{T3} = \frac{C_1}{3} = C_T \tag{30}$$

Ainsi il est à noter que la valeur des condensateurs résonants $C_T$ dépend de $C_1$, donc de $L_1$, et par conséquent des inductances propres $L_T$ et inductances mutuelles $M_{12}$, $M_{13}$, et $M_{23}$. Les équations 33, 34 et 35 ci-dessous donnent l'expression des impédances totales tenant compte de la présence des condensateurs ajoutés:

$$Z_{T1}' = R_T + j.w.\left(L_T + M_{12}.\frac{\overline{I_{T2}'}}{\overline{I_{T1}'}} + M_{13}.\frac{\overline{I_{T3}'}}{\overline{I_{T1}'}}\right) + \frac{1}{j.w.C_T} \tag{31}$$

$$Z_{T1}' = R_T + j.w.\left(L_T + M_{12}.\frac{\overline{I_{T2}'}}{\overline{I_{T1}'}} + M_{13}.\frac{\overline{I_{T3}'}}{\overline{I_{T1}'}} - \frac{1}{w^2.C_T}\right) \tag{32}$$

De même :

$$Z_{T2}' = R_T + j.w.\left(L_T + M_{12}.\frac{\overline{I_{T1}'}}{\overline{I_{T2}'}} + M_{23}.\frac{\overline{I_{T3}'}}{\overline{I_{T2}'}} - \frac{1}{w^2.C_T}\right) \tag{34}$$

$$Z_{T3}' = R_T + j.w.\left(L_T + M_{13}.\frac{\overline{I_{T1}'}}{\overline{I_{T3}'}} + M_{23}.\frac{\overline{I_{T2}'}}{\overline{I_{T3}'}} - \frac{1}{w^2.C_T}\right) \tag{35}$$

Les équations 33, 34 et 35 ci-dessus montrent que l'ajout du terme avec la capacité $C_T$ vient réduire le terme facteur de « $j.w$ ». La résistance $R_T$ des torons étant égales, l'ajout des condensateurs résonants $C_T$ vient donc réduire les différences d'impédance entre les torons 22. Les nouvelles impédances totales $Z_{T1}'$, $Z_{T2}'$ et $Z_{T3}'$ ont donc des valeurs plus proches que les impédances $Z_{T1}$, $Z_{T2}$ et $Z_{T3}$ obtenues dans le cas classique, voir équations 27, 28 et 29.

Simulations

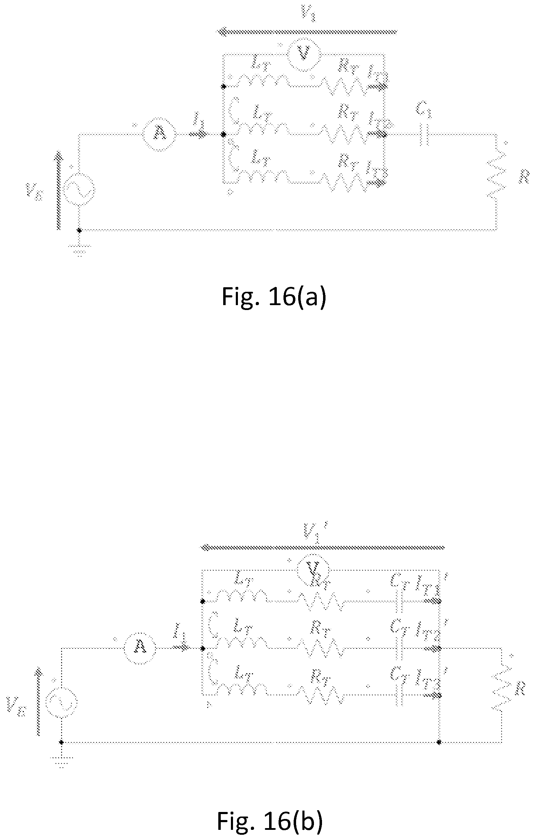

Afin d'analyser la distribution de courant dans le cas classique et avec la solution proposée, des simulations sur le logiciel de simulation de circuits électroniques PSIM ont été réalisées. Considérant l'exemple du fil de Litz à trois torons 22, le circuit électrique du cas classique avec un condensateur résonant pour le fil de Litz est représenté sur la figure **16a,** tandis que le circuit électrique considérant un condensateur résonant par toron 22 est illustré sur la figure 16b. Les paramètres pour ces simulations sont :

- Une tension d'entrée $V_E$ = 1 V,

- Des résistances $R_T$ égales à 333 $m\Omega$ ,

- Une fréquence de résonance fr et fonctionnement $f_{dec}$ de 81 kHz et 85 kHz respectivement.

- Les inductances propres $L_T$ dans les torons égales à 100 $\mu H$.

- Une résistance de charge R = 1 $\Omega$.

Nous allons montrer dans ce qui suit l'importance des coefficients de couplage entre les torons du fil de Litz dans la distribution de courant. Cette influence sera mise en lumière en simulant d'abord le cas idéal avec des coefficients de couplage égaux, puis en simulant un cas réaliste avec des coefficients de couplage différents.

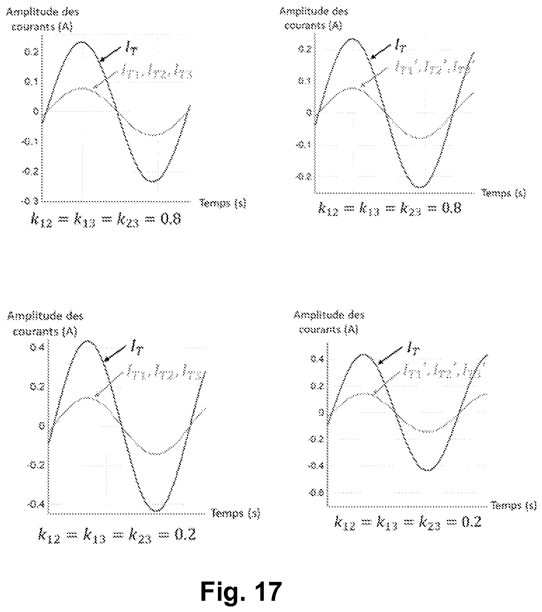

Une première comparaison des courants $I_{T1}$, $I_{T2}$ et $I_{T3}$ obtenus dans le cas classique et des courants $I_{T1}'$, $I_{T2}'$ et $I_{T3}'$ obtenus avec la solution proposée est donc réalisée dans le cas idéal où les coefficients de couplage $k_{12}$, $k_{13}$ et $k_{23}$ entre les torons T1, T2, et T3 sont égaux. Les inductances mutuelles induites $M_{12}$, $M_{13}$ et $M_{23}$ sont donc égales de par les relations (33), (34) et (35). On constate (voir **figure 17)** que la distribution de courant reste homogène entre la solution classique et la solution selon la présente invention.

$$M_{12} = k_{12}.L_T \qquad (33)$$

$$M_{13} = k_{13}.L_T \qquad (34)$$

$$M_{23} = k_{23}.L_T \qquad (35)$$

La distribution de courant dans les conducteurs en parallèle est parfaitement homogène dans les deux cas, classique et proposé. Cela est bien illustré par les courants obtenus dans les torons T1, T2 et T3 dont les courbes se superposent parfaitement sur les graphes de la figure 17. Les simulations ont été réalisées pour deux coefficients de couplage différents, soit $k_{12} = k_{13} = k_{23} = 0.8$ dans un premier temps, puis $k_{12} = k_{13} = k_{23} = 0.2$ dans un second temps. Il est à noter que la distribution de courant reste homogène pour ces deux valeurs.

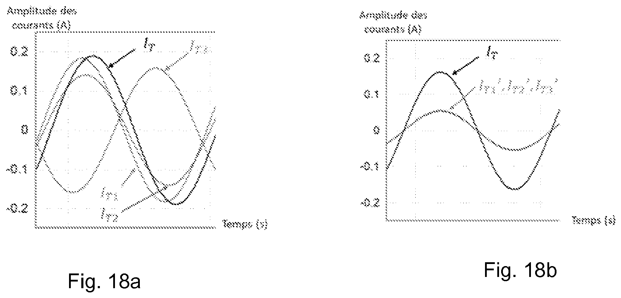

Nous allons maintenant montrer l'avantage que présente l'invention sur la distribution de courant lorsque les coefficients de couplage sont distincts, situation réaliste. Une différence inférieure à 10 % suffit dans le cas classique à provoquer des écarts importants entre les courants dans les torons comme le montre la figure 18a. Les coefficients de couplage dans les simulations ci-dessous sont : $k_{12} = 0.9$; $k_{13} = 0.98$ ; $k_{23} = 0.95$. Les coefficients de couplage $k_{13}$ et $k_{23}$ étant supérieurs à $k_{12}$, les impédances induites dans le toron T3 sont plus importantes, générant un déphasage avec les autres courants. Il est à noter que dans le cas classique, l'amplitude des courants $I_{T1}$, $I_{T2}$ et $I_{T3}$ est proche de celle de $I_T$, alors qu'elles devraient être égales à $I_T/3$ dans le cas d'une distribution de courant parfaitement homogène. Ces très forts courants génèrent des pertes supplémentaires. La solution selon la présente invention permet d'avoir un équilibrage des courants $I_{T1}'$, $I_{T2}'$ et $I_{T3}'$ bien meilleur comme le montre la figure 18b, dont les courbes de l'amplitude en fonction du temps se superposent.

Les tests expérimentaux suivants visent à valider l'impact positif de la solution proposée sur la distribution de courant dans des conducteurs couplés connectés électriquement à leurs extrémités. Ces tests sont effectués sur un fil de Litz à 16 torons.

### Expérimentations

Des tests à 5 kW et à 82 kHz ont été effectués sur un prototype d'une puissance nominale de 20 kW. Ceux-ci ont pour but de montrer le gain sur l'homogénéité de la distribution de courant avec la solution selon la présente invention devant la solution classique. Le fil de Litz 20 utilisé pour former le bobinage primaire 6 et le bobinage secondaire 8 du coupleur 3 a une section de cuivre de 25 mm$^2$, et dispose d'un design 16*10*20, soit composé de 3200 brins élémentaires.

Le test n°1 correspond au cas classique, le test n°2 correspond à la solution selon la présente invention. Le courant dans le fil de Litz et celui dans chacun des torons du bobinage secondaire est mesuré lors de ces tests. Le schéma du système testé est celui de la partie du schéma électrique de la figure 2, entourée en gris et nommée « système étudié ».

### Résultats

Les mesures effectuées dans le cas classique et dans le cas de solution selon la présente invention sont disponibles à la table 1 ci-dessous.

[Table 1]

|  | Test n°1 / Solution Classique | Test n°2 / Solution de la présente invention |
|---|---|---|
| N° Toron | Courant ($A_{eff}$) | Courant ($A_{eff}$) |
| Toron 1 | 1,23 | 0,89 |

(suite)

| N° Toron | Test n°1 / Solution Classique<br>Courant ($A_{eff}$) | Test n°2 / Solution de la présente invention<br>Courant ($A_{eff}$) |
|---|---|---|
| Toron 2 | 2,02 | 0,89 |
| Toron 3 | 1,14 | 0,88 |
| Toron 4 | 1,36 | 0,88 |
| Toron 5 | 0,61 | 0,89 |
| Toron 6 | 0,4 | 0,87 |
| Toron 7 | 1,61 | 0,89 |
| Toron 8 | 1,03 | 0,89 |
| Toron 9 | 1,42 | 0,88 |
| Toron 10 | 0,66 | 0,90 |
| Toron 11 | 1,38 | 0,89 |
| Toron 12 | 1,56 | 0,89 |
| Toron 13 | 0,54 | 0,89 |
| Toron 14 | 1,56 | 0,88 |
| Toron 15 | 0,69 | 0,90 |
| Toron 16 | 1,09 | 0,89 |
| Moyenne des courants | 1,14 | 0,89 |
| Ecart type ($A_{eff}$) | 0,46 | 0,01 |
| Pertes totales | 2,66 W | 1,39 W |

Le courant total mesuré dans le fil de Litz est de 14.5 Ampère efficace ($A_{eff}$) et de 14.2 $A_{eff}$ respectivement dans les tests n°1 et n°2. Il est à noter que la somme des valeurs efficaces des courants dans les torons est supérieure au courant efficace total dans le fil de Litz dans le cas classique. Cela est dû aux déphasages entre ces courants. Ce problème est corrigé avec la solution de la présente innovation, la somme des courants dans les torons est égale au courant total dans le fil de Litz.

Concernant la différence des valeurs efficaces des courants, d'importantes différences apparaissent dans le cas classique, ce qu'illustre l'écart-type de 0.46 $A_{eff}$ considérant une moyenne des courants de 1.14 $A_{eff}$.

Les résultats du test n°2 montrent un écart-type de 0.01 $A_{eff}$ pour une moyenne des courants efficaces dans les torons de 0.89 $A_{eff}$. La distribution de courant est donc fortement améliorée avec la solution de la présente innovation. Les pertes totales dans le fil de Litz considérant les résistances DC sont de 2.66 W dans le cas classique contre 1.39 W avec la solution de la présente innovation. La réduction des pertes liées à la résistance DC obtenues est de 91 %.

Autres variantes de réalisation

Bien entendu, l'ajout de condensateurs pour compenser des écarts d'impédances entre conducteurs 22 du fil de Litz est applicable quel que soit le nombre de ces conducteurs 22. En particulier, la formules (16) et (31) sont généralisables en à N conducteurs et N condensateurs associés, en remplaçant 3 par N dans ces formules, avec N supérieur ou égal à 2, voire 3.

Il est également possible de faire de la compensation sur l'ensemble des sous-torons 24 pour fil de Litz à deux niveaux ou plus, ou encore de la compensation par brin. La théorie derrière ces variantes est exactement la même que celle présentée, à la différence que le nombre de conducteurs en parallèle augmentent. Considérant le fil de Litz utilisé dans les expérimentations précédentes avec un design de 16x10x20 à trois niveaux, le nombre de conducteurs à compenser est de :

- 16 lors d'une compensation par toron

- 16 x 10 = 160 dans le cas d'une compensation par sous-toron

- 16 x 10 x 20 = 3200 dans le cas d'une compensation par brin

On comprend ainsi que le nombre de condensateurs ajoutée peut être supérieur ou égal au nombre de conducteurs 22, selon le niveau de granularité de la compensation effectuée.

## Revendications

**1.** Dispositif (2) de transfert d'énergie électrique comprenant :

- un fil de Litz (20) comprenant des conducteurs électriques (22) toronnés ou tressés ensemble, le fil de Litz (20 étant enroulé sur lui-même de sorte à former un bobinage (6) propre à former un coupleur magnétique (3) avec un autre bobinage (8),

**caractérisé par** :

- des condensateurs ($C_{T1}$, $C_{T2}$, $C_{T3}$) respectivement agencés en série avec les conducteurs (22), les condensateurs ($C_{T1}$, $C_{T2}$, $C_{T3}$) étant configurés pour compenser des écarts entre les impédances respectives des conducteurs électriques (22).

**2.** Dispositif selon la revendication 1, dans lequel les condensateurs ont tous la même capacité.

**3.** Dispositif (2) selon la revendication 2, dans laquelle la capacité vaut

$$\frac{1}{4N.\pi^2.f_r^2.L_1}$$

où :

- $N$ est le nombre de condensateurs,
- $L_1$ est une inductance de la pluralité de conducteurs,
- $f_r$ est une fréquence de résonance du fil de Litz.

**4.** Dispositif (2) selon l'une quelconque des revendications précédentes, dans lequel tous les condensateurs ont un point de tension commun.

**5.** Dispositif (2) selon l'une des revendications précédentes, dans lequel au moins un des conducteur électriques (22) comprend des sous-conducteurs électriques (24) isolés entre eux et toronnés ou tressés ensemble.

**6.** Dispositif selon l'une des revendications précédentes, dans lequel au moins un des sous-conducteurs électriques (24) comprend des brins conducteurs (26) isolés entre eux et toronnés ou tressés ensemble.

**7.** Système de transfert d'énergie (1) comprenant deux dispositifs de transfert d'énergie électrique (1, 2) selon la revendication 1, dans lequel les bobinages (4, 6) respectifs des deux dispositifs de transfert d'énergie électrique (1, 2) forment ensemble un coupleur magnétique (3).

**8.** Utilisation du dispositif de transfert d'énergie (2) selon l'une des revendications 1 à 6 ou du système de transfert d'énergie (1) selon la revendication 7 pour recharger un véhicule électrique.

## Patentansprüche

**1.** Vorrichtung (2) zur Übertragung von elektrischer Energie, umfassend:

- einen Litzdraht (20), der elektrische Leiter (22) umfasst, die zusammen verdrillt oder verflochten sind, wobei der Litzdraht (20 so um sich selbst gewickelt ist, dass er eine Wicklung (6) bildet, die imstande ist, eine magnetische Kupplung (3) mit einer anderen Wicklung (8) zu bilden,

**gekennzeichnet durch**:

- Kondensatoren ($C_{T1}$, $C_{T2}$, $C_{T3}$), die jeweils in Reihe mit den Leitern (22) angeordnet sind, wobei die Kondensatoren ($C_{T1}$, $C_{T2}$, $C_{T3}$) so ausgelegt sind, dass sie Unterschiede zwischen den jeweiligen Impedanzen der elektrischen Leiter (22) ausgleichen.

2. Vorrichtung nach Anspruch 1, wobei die Kondensatoren alle die gleiche Kapazität aufweisen.

3. Vorrichtung (2) nach Anspruch 2, wobei die Kapazität beträgt

$$\frac{1}{4N.\pi^2.f_r^2.L_1}$$

wobei:

- N die Anzahl der Kondensatoren ist,
- $L_1$ eine Induktivität der Vielzahl von Leitern ist,
- $f_r$ eine Resonanzfrequenz des Litzdrahts ist.

4. Vorrichtung (2) nach einem der vorhergehenden Ansprüche, wobei alle Kondensatoren einen gemeinsamen Spannungspunkt aufweisen.

5. Vorrichtung (2) nach einem der vorhergehenden Ansprüche, wobei mindestens einer der elektrischen Leiter (22) elektrische Unterleiter (24) umfasst, die voneinander isoliert und zusammen verdrillt oder verflochten sind.

6. Vorrichtung nach einem der vorhergehenden Ansprüche, wobei wenigstens einer der elektrischen Unterleiter (24) voneinander isolierte und zusammen verdrillte oder verflochtene Leiterstränge (26) umfasst.

7. System zur Übertragung von Energie (1), umfassend zwei Vorrichtungen zur Übertragung von elektrischer Energie (1, 2) nach Anspruch 1, wobei die jeweiligen Wicklungen (4, 6) der beiden Vorrichtungen zur Übertragung von elektrischer Energie (1, 2) zusammen eine magnetische Kupplung (3) bilden.

8. Verwendung der Vorrichtung zur Übertragung von Energie (2) nach einem der Ansprüche 1 bis 6 oder des Systems zur Übertragung von Energie (1) nach Anspruch 7 zum Laden eines Elektrofahrzeugs.

**Claims**

1. An electrical energy transfer device (2) comprising:

- a Litz wire (20) comprising electrical conductors (22) twisted or braided together, the Litz wire (20) being wound on itself so as to form a coil (6) capable of forming a magnetic coupler (3) with another coil (8),

**characterised by**:

- capacitors ($C_{T1}$, $C_{T2}$, $C_{T3}$) respectively arranged in series with the conductors (22), the capacitors ($C_{T1}$, $C_{T2}$, $C_{T3}$) being configured to compensate for differences between the respective impedances of the electrical conductors (22).

2. Device according to claim 1, wherein the capacitors all have the same capacitance.

3. Device (2) according to claim 2, wherein the capacitance is

$$\frac{1}{4N.\pi^2.f_r^2.L_1}$$

where:

- N is the number of capacitors,
- $L_1$ is an inductance of the plurality of conductors,
- $f_r$ is a resonance frequency of the Litz wire.

4. Device (2) according to any of the preceding claims, wherein all capacitors have a common voltage point.

5. Device (2) according to any of the preceding claims, wherein at least one of the electrical conductors (22) comprises electrical sub-conductors (24) that are insulated from each other and stranded or braided together.

6. Device according to any of the preceding claims, wherein at least one of the electrical sub-conductors (24) comprises electrical strands (26) insulated from each other and stranded or braided together.

7. Energy transfer system (1) comprising two electrical energy transfer devices (1, 2) according to claim 1, wherein the respective windings (4, 6) of the two electrical energy transfer devices (1, 2) together form a magnetic coupler (3).

8. Use of the energy transfer device (2) according to one of claims 1 to 6 or the energy transfer system (1) according to claim 7 for recharging an electric vehicle.

Fig. 1

Fig. 2

Fig. 3(a)

Fig. 3(b)

16
12
8
3
10

*Véhicule*

*blindage*
*ferrite*
*bobinages*

*E (entrefer)*

6
14

*Sol*

## Fig. 4(a)

3

16
12
8
6
10
14

## Fig. 4(b)

Fig. 5

Fig. 6

Fig. 7

20

Fig. 8

20

26

24

22

20

Fig. 9

Fig. 10

EP 4 445 393 B1

Fig. 11

Fig. 12

22

Fig. 13(a)        Fig. 13(b)

Fig. 14

Fig. 15(a)

Fig. 15(b)

Fig. 16(a)

Fig. 16(b)

Fig. 17

Fig. 18a

Fig. 18b

## RÉFÉRENCES CITÉES DANS LA DESCRIPTION

**Documents brevets cités dans la description**

- US 20110140539 A1